# EUROPEAN PATENT SPECIFICATION

(11) **EP 1 235 757 B1**
(45) Date of publication and mention of the grant of the patent: **30.08.2006**
(21) Application number: 00992824.3
(22) Date of filing: 01.12.2000
(51) Int. Cl.: C03C 17/36

(54) **HAZE-RESISTANT TRANSPARENT FILM STACKS**
DURCHSICHTIGES BESCHICHTUNGSSYSTEM BESTÄNDIG GEGEN ANLAUFEN
EMPILEMENTS DE FILMS TRANSPARENTS RESISTANT AU TROUBLE

(30) Priority: 02.12.1999 US 168497 P
(43) Date of publication of application: 04.09.2002
(73) Proprietor: Cardinal CG Company, Minnetonka, MN 55343-9947 (US)
(72) Inventor: HARTIG, Klaus, Avcoa, WI 53506 (US); KRISKO, Annette, Prairie du Sac, WI 53578 (US)
(74) Representative: Howe, Steven
(86) International application number: PCT/US2000/042434
(87) International publication number: WO 2001/044131

(56) References cited:
- EP-A- 0 847 965
- EP-A- 1 010 677
- WO-A-97/48649
- FR-A- 2 746 791
- US-A- 5 948 538
- US-A- 5 962 115

## Description

The present invention relates to transparent film stacks of the type commonly applied to window glazings or the like and has particular utility in connection with-temperable, low emissivity coatings.

Low emissivity coatings are well known in the art. Typically, they include one or more layers of an infrared reflective film and one or more layers of a dielectric material. The infrared reflective films, which typically are conductive metals such as silver, gold or copper, help reduce transmission of heat through the coating. The dielectric materials are used primarily to reduce visible reflectance and to control other properties of the coatings, such as color and visible transmittance. Commonly used dielectric materials include oxides of zinc, tin, indium, bismuth, and titanium, among others.

U.S. Patent 4,859,532, issued to Oyama, et al. describes one simple film stack which can be used to create a low emissivity coated glass article. The patent describes a five-layered transparent coating having a zinc oxide layer formed directly on the substate, which is typically a sheet of float glass or the like. A second silver layer is formed on the zinc oxide layer. A third zinc oxide layer is formed on the second silver layer. A fourth silver layer is formed on the third zinc oxide layer. Finally, a fifth zinc oxide layer is formed on the fourth silver layer. The thickness of the first and fifth zinc oxide layers is said to be 200-600Å while the thickness of the third, middle zinc oxide layer is said to be 400-1200Å. Both of the silver layers are 60-250Å thick, with a range of 80-100Å being said to be preferred.

It is often necessary to heat glass sheets to temperatures at or near the melting point of the glass to temper the glass or to enable the glass to be bent into desired shapes such as motor vehicle windshields. Coated glass articles often must be able to withstand high temperatures for periods of time up to several hours. Tempering, as is known, is particularly important for glass intended for use as automobile windows and particularly for use as automobile windshields. Upon breaking, tempered windshields desirably exhibit a break pattern in which they shatter into a great many small pieces rather than into large, dangerous sharp shards. Tempering temperatures on the order of 600°C and above are required. Film stacks employing silver as an infrared reflective film often cannot withstand such temperatures without some deterioration of the silver film. To avoid this problem, glass sheets can be heated and bent or tempered before they are coated, and later can be provided with the desired metal and metal oxide coatings. Particularly for bent glass articles, though, this procedure may produce nonuniform coatings and is costly.

One further problem encountered during tempering is the development of a haze within the film stack. It appears that this hazing is associated with the growth of crystals within the dielectric layers. When these layers are initially deposited (e.g., via magnetron sputtering), they tend to have either a fairly amorphous microstructure or a rather small grain size. At the elevated temperatures associated with tempering, the crystals in these dielectric layers are believed to grow larger until they become large enough to have a direct effect on the light passing therethrough. This, it is surmised, causes haze in the coating when it is treated at elevated temperatures.

If the 5-layer Oyama et al. film stack were tempered at elevated temperatures, it is rather likely that the silver layers would be oxidized sufficiently to render the resulting coated glass article unsalable. Even if the film stack were modified to protect the silver layers, the tempering likely would reduce transmittance of the coating due to the development of a haze in the dielectric ZnO layers. The impact of this haze on the quality of the glass coating would depend on the tempering profile - longer times at elevated temperatures will further increase the hazing problem while shorter, cooler cycles will minimize (though not eliminate) the hazing problem.

The above description pertains primarily to efforts to produce glass structures useful as architectural glass or glass for automobile windows, in which the glass structures in use are not usually subjected to high temperatures after they have once been tempered or bent. Coated glass sheets may also find utility as windows for ovens of various types in which the windows are subjected to repeated heating and cooling cycles as the ovens are heated and cooled during normal usage. A good example of such usage is a self-cleaning kitchen oven in which the oven temperature may be repeatedly raised to cooking temperatures of 250°F to 450°F with frequent excursions to, e.g., 900°F during cleaning cycles. An oven window of this type should be transparent to enable one to see through it into the oven. It should be highly reflective in the infrared range to retard heat loss from the oven and help keep the exterior of the oven from getting too hot. Further, it must be resistant to deterioration resulting from repeated temperature escalations while exposed to the conditions of humidity and chemical (food) oven conditions.
FR-A-2746791 discloses a coated sheet for use in a laminated assembly including a first transparent, non-absorbent, dielectric layer, a first metal layer, a transparent, non-absorbent, dielectric stack, a second metal layer and a further transparent, non-absorbent, dielectric layer. Various examples of crystalline dielectric stacks are disclosed.

WO-A-97/48649 discloses the following stack: glass/Si₃N₄/ZnO/Ag/Nb/ZnO/Si₃N₄/ZnO/Ag/Nb/ZnO/Si₃N₄.

The present invention provides a haze-resistant temperable coating and a method of forming a coated glass article. In accordance with one embodiment of the invention, the coating is carried by a substrate having a surface. This coating comprises, from the substrate surface outwardly, an inner dielectric layer; a first infrared reflective layer, an intermediate dielectric stack; a second infrared reflective layer, and an outer dielectric layer. This intermediate dielectric stack includes at least five intermediate dielectric layers, each of which have a physical thickness of no more than about 250Å. Each of the intermediate dielectric layers has a different microstructure from each dielectric layer contiguous thereto to limit crystal growth therebetween during tempering, wherein the five intermediate dielectric layers are as defined in claim 1.

Once the heat treatable coating is deposited, the resultant coated glass substrate is heated to a temperature of at least about 400°C, which temperature promotes crystal growth in at least one of the first and second dielectrics. The different microstructures of the first and second dielectrics limit crystal growth therebetween during said heating. As a consequence, even if the glass substrate is heated (e.g., during tempering or during ordinary use), the crystals in the dielectric layers will be limited to a relatively small size, reducing haze which may otherwise develop in the film stack.

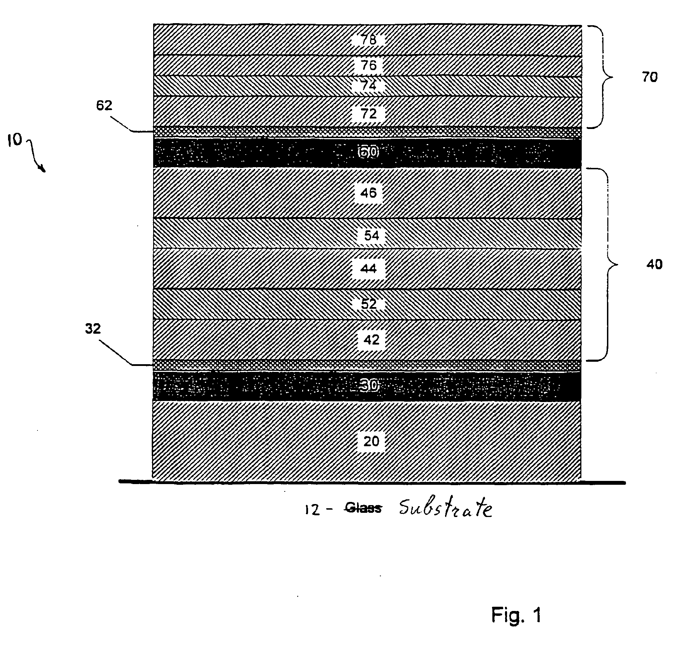

Figure 1 is a schematic cross-sectional view of one embodiment of a film stack in accordance with the invention.

Figure 1 schematically illustrates a coated substrate in accordance with one embodiment of the invention. It should be understood that this drawing is intended merely to illustrate the concepts of the invention and the thicknesses of the various layers in the drawing are not to scale. The coated substrate in this drawing comprises a coating of the invention applied to a a substrate 12. While opaque substrates may be used, it is anticipated that for most applications of this invention, a substrate will comprise a transparent or translucent material such as glass or a clear plastic. While the substrate could take any form, one particularly suitable application for the invention is in tempered windows, such as those used in architectural applications, automobile windshields and oven doors, to name but a few examples.

An inner dielectric layer 20 is applied on the surface 14 of the substrate 12. This inner dielectric layer may be of any desired composition. As described in U.S. Patent 5,296,302 suitable dielectric layers for this purpose include oxides of zinc, tin, indium, bismuth, titanium, hafnium, zirconium, and alloys thereof. While oxides are generally preferred due to their ease and low cost of application, other dielectric materials such as metal nitrides could be used if desired.

The inner dielectric layer 20 may comprise a single layer of a single dielectric material, as shown. If such a single layer is used, it is generally preferred that this inner dielectric layer be formed of an oxide of zinc or an alloy or mixture thereof, such as a mixture of zinc oxide and bismuth oxide or tin oxide (referred to in Table 1 below as "Zn+"). It should be understood, though, that the single layer 20 shown in Figure 1 may be replaced with two or more layers of different dielectric materials. While the exact composition of this inner dielectric layer is beyond the scope of the present invention, it is generally preferred that at least a thin layer of zinc oxide be applied as the outermost layer (i.e., the layer farthest away from the substrate 12 and immediately adjacent a first reflective layer 30) as this is believed to enhance the optical properties of the film stack, at least if silver is used as the layer 30.

The next layer in the coating of Figure 1 is the first infrared reflective layer 30. This first infrared reflective layer is contiguous to, i.e., in direct physical contact with, the inner dielectric layer 20. Any suitable infrared reflective material can be used for this layer. Silver, gold and copper, as well as alloys thereof, are the most commonly used infrared reflective layers. It is preferred that the infrared reflective layer 30 be formed of silver or silver combined with no more than about 5% gold.

In order to protect the silver layer during application of subsequent layers and during any tempering operation, a first sacrificial layer 32 is desirably applied over and contiguous to the first reflective layer 30. The primary purpose of this sacrificial layer 32 is to protect the underlying infrared reflective layer 30 from chemical attack. Any material which is more readily oxidized than is the infrared reflective layer may be used as such a sacrificial layer. In most commercial applications, a thin layer of titanium metal is applied, with the majority of that titanium metal being converted to a titanium oxide of varying stoichiometry during deposition of subsequent layers of the coating. In one particularly preferred embodiment, though, the sacrificial layer 32 comprises a layer of niobium deposited at a thickness sufficient to protect the reflective layer 30 from degradation both during sputtering of subsequent layers and from degradation during high temperature applications or tempering. Suitable thicknesses for such niobium layers range from 7-25Å, with a range of about 12-18Å being preferred. While this is not illustrated in Figure 1, such a niobium sacrificial layer may also be provided under the infrared reflective layer 30. Barrier layers of niobium used in transparent film stacks are discussed in some detail, in PCT International Publication No. WO 97/48649.

The intermediate dielectric stack 40 is positioned between the first infrared reflective layer 30 and a second infrared reflective layer 60. This intermediate dielectric stack comprises at least five intermediate dielectric layers, as shown in Figure 1, and may optimally comprise 7 or more discrete intermediate dielectric layers. In one embodiment which has been found to work well, there is always an odd number of intermediate dielectric layers so the bottom and top layers of this stack 40 both comprise the same dielectric material.

In the configuration shown in Figure 1, the intermediate dielectric stack 40 includes a first intermediate layer 42, third intermediate layer 44 and fifth intermediate layer 46 formed of a first dielectric material which comprises an oxide or suboxide of zinc and a second intermediate layer 52 and fourth intermediate layer 54 formed of a second dielectric material which comprises silicon nitride. Each of the illustrated layers is applied contiguous to at least one other layer of the intermediate dielectric stack 40. Hence, in the embodiment shown in Figure 1, the second intermediate layer 52 is contiguous to both the first intermediate layer 42 and the third intermediate layer 44. Similarly, the fourth intermediate layer 54 is contiguous to the third intermediate layer 44 and the fifth intermediate layer 46.

For reasons discussed below, it is important that each layer of the intermediate dielectric layers have a different microstructure from each dielectric layer contiguous thereto, preferably by forming contiguous layers of different materials.

Care should be taken to ensure that none of the layers of the intermediate dielectric stack 40 be too thick. Instead, it is preferred that each of these layers be kept relatively thin to limit the size of the crystals which may grow during use or tempering of the coated substrate 10. It is preferred that the thickness of each of these layers be maintained well beneath one-quarter of the wavelength of the light of primary interest. If the substrate is used as a window, for example, maximizing transmission of visible light and reducing visible haze is paramount. As visible light is generally considered to be 3,000-7,000Å in wavelength, it is important that each of the layers be less than about 700Å in optical thickness. (Optical thickness, which is a measure of the optical effect of a thin film on light transmitted therethrough, is the product of the physical thickness of the layer and the index of refraction of the material comprising the layer. For example, a 200Å layer of zinc oxide having an index of refraction of about 2.0 will have an optical thickness of about 400Å.)

If crystals in thin films become too large, it is believed that they will scatter light passing therethrough even if they are not so large as to exceed a quarter of the wavelength of the light. Accordingly, to minimize the likelihood of such destructive and unattractive scattering, each of the intermediate dielectric layers 42-54 of the intermediate dielectric stack 40 desirably have an optical thickness of no more than about 450Å. While each layer is desirably no thicker than this maximum, all of the layers need not have the same thickness. For example, in one embodiment of the invention, each of the layers of the first dielectric material which comprises an oxide or suboxide of zinc (intermediate layers 42, 44 and 46 in Figure 1) may have an optical and physical thickness greater than the optical or physical thickness of any of the layers of the second dielectric which comprises silicon nitride (intermediate layers 52 and 54 in Figure 1). For example, each of the first, third and fifth dielectric layers may be 160-225Å in physical thickness while each of the layers of the second dielectric are maintained at only about 100-150 Å.

In one exemplary embodiment of the invention, the first, third and fifth intermediate layers 42, 44 and 46, respectively, are formed of an oxide or suboxide of zinc. (The term "suboxide" is intended to refer to an oxide of a metal which is not fully oxidized, i.e., is substoichiometric. The oxide of zinc rather than being a fully stoichiometric ZnO, is ZnOₓ where x is less than 1, but is preferably at least about 0.8.)

The second and fourth intermediate layers (52 and 54, respectively) of this embodiment are formed silicon nitride. The silicon nitride can be fully stoichiometric (i.e., Si₃N₄) or may be slightly substoichiometric i.e., such that the ratio of silicon to nitrogen is greater than 3/4. One advantage of utilizing silicon nitride as one of the dielectrics and zinc oxide as the other dielectric is the likelihood that these two materials would have a significantly different crystalline structure. Zinc oxide and silicon nitride have significantly different equilibrium crystal habits. Depending on the manner in which the layers of the film stack are applied, the crystal structure of the zinc oxide and silicon nitride as initially applied can vary somewhat. However, in an equilibrium state, which is promoted by high temperature use or processing, the dielectric materials will tend to adopt their normal microstructure and, if polycrystalline, the crystals will tend to grow.

Zinc oxide is a polycrystalline material when applied in thin films via magnetron sputtering. Treating zinc oxide films at high temperatures, such as in tempering operations, tends to promote relatively rapid crystal growth. If the layers of zinc oxide in a film stack are too thick, this can contribute significantly to haze. Thin layers of silicon nitride tend to be fairly amorphous as applied and do not develop strong crystalline structures with pronounced grain boundaries under normal tempering conditions. Hence, silicon nitride layers can be thought of as substantially amorphous even after tempering.

By placing layers of silicon nitride between layers of zinc oxide, the growth of the zinc oxide crystals in a direction perpendicular to the surface 14 of the substrate 12 will be limited. If two contiguous dielectric layers had similar crystal habits, either upon initial deposition or as an equilibrium form at elevated processing temperatures, crystal growth in one layer could tie into the growth of crystals in adjacent layers and promote grain boundaries which extend from one layer to the next. Silicon nitride, however, is relatively amorphous in thin films and will serve to effectively prevent propagation of the zinc oxide grain boundaries outside of the thickness of the layer in which the ZnO is applied. This will help manage the crystal size and, as a consequence, significantly reduce haze which may otherwise result from high temperature treatment or use of such films.

Figure 1 illustrates a "double-silver" film stack which includes a second infrared reflective layer 60 carried atop the intermediate dielectric stack 40. In this embodiment, the second infrared reflective layer 60 is contiguous to the fifth intermediate layer 46. As noted above, a sacrificial layer of niobium or any other suitable nucleation layer can be disposed between the intermediate dielectric stack 40 and the infrared reflective layer 60. It has been found that applying a layer of zinc oxide immediately beneath a layer of silver promotes deposition of a high quality silver film. If so desired, the outermost dielectric layer of the intermediate dielectric stack (46 in Figure 1) may be formed of a first oxide layer, such as an oxide of a zinc alloy, and a second layer of an oxide of zinc alone, provided the two combined layers would have a similar thickness and optical effect to the illustrated single layer 46.

The materials useful in forming the first infrared reflective layer 30 are also useful in forming the second infrared reflective layer 60. It is anticipated that both of these layers will be formed of the same material. Preferably, both layers are formed of silver, with the second, outer layer 60 being somewhat thicker than the inner layer 30. Similarly, a second sacrificial layer 62 of niobium or the like can be applied over the second infrared reflective layer 60 to help protect the second infrared reflective layer from oxiding or nitriding during subsequent processing or use.

An outer dielectric layer is applied over the outer infrared reflective layer 60. The exact nature of this outer dielectric layer can be varied as desired. Any of a wide variety of single layers or film stacks known in the art can be used as the outermost layer or layers of the film stack. It is preferred, though, that none of the layers of this film stack have a physical thickness of more than about 225Å or an optical thickness of more than about 450Å. For the same reasons discussed above in connection with the intermediate dielectric stack 40, this will help reduce the likelihood of generating objectionable haze during subsequent processing or use.

In the illustrated embodiment, an outer dielectric stack 70 is applied over the sacrificial layer 62. This outer stack 70 may comprise, for example, an oxide of zinc or a zinc alloy applied at about 60-70Å. A layer of titanium nitride 76 is sandwiched between layers of silicon nitride 74, 78 and this sandwich is applied directly over the zinc oxide layer 72. In one exemplary embodiment, the innermost of these silicon nitride layers 74 is on the order of 20-50Å thick, the tin oxide layer 76 is about 12-15Å and the outermost silicon nitride layer is 150-180Å.

As noted above, the present invention also contemplates a method of producing a coated substrate, e.g., a coated glass article. In discussing this method, reference will be made to a method for producing the coated substrate 12 of Figure 1 and the ensuing discussion will point to specific layers by reference number in Figure 1. It should be understood, though, that this is merely for purposes of illustration and that the method of the invention can be used to make coated articles other than those illustrated in Figure 1.

In accordance with this method, a substrate 12 having a surface is provided. If so desired, this substrate surface may be prepared by suitable washing or chemical preparation.

A heat-treatable coating is deposited on the surface of the substrate 12 as a series of discrete layers. These layers can be deposited in any desired fashion. One preferred method of depositing these layers utilizes DC magnetron sputtering, which is commonly used in the industry and one embodiment of which is described in Chapin's U.S. Patent 4,166,018, the teachings of which are incorporated herein by reference. Briefly, though, magnetron sputtering deposition involves transporting a substrate through a series of low pressure zones in which the various films that make up the film stack are sequentially applied. Metallic films are sputtered from metallic sources or "targets," typically in an inert atmosphere such as argon. To deposit a dielectric film, the target may be formed of the desired dielectric itself (e.g., zinc oxide or titanium dioxide). More commonly, though, the dielectric layers are applied by sputtering a metal target in a reactive atmosphere. To deposit zinc oxide, for example, a zinc target will be sputtered in an oxidizing atmosphere; silicon nitride may be deposited by sputtering a silicon target (which may be doped with aluminum or the like to improve conductivity) in a reactive atmosphere containing nitrogen gas. The thickness of the films that are thus deposited may be controlled by varying the speed of the glass substrate through the coating compartments and by varying the power and sputtering rate of each individual target.

Another method for depositing thin films upon a substrate involves plasma chemical vapor deposition. Reference is made to U.S. Patent 4,619,729 (Johncock et al.) and U.S. Patent 4,737,379 (Hudgens et al.), the teachings of both of which are incorporated herein by reference. Such plasma chemical vapor deposition involves the decomposition of gaseous sources via a plasma and subsequent film formation onto solid surfaces, such as glass substrates. The thickness of the film can be adjusted by varying the speed of the substrate as it passes through a plasma zone and by varying the power and gas flow rate within each zone.

The following Table 1 illustrates three different film stacks which have been found to yield good results when tempered:

**TABLE I**

| LAYER | SAMPLE A | SAMPLE B | SAMPLE C | SAMPLE D |
|---|---|---|---|---|
| Zn+ | 65 Å | 66 Å | 65 Å | 84 Å |
| ZnO | 57 Å | 56.7 Å | 45 Å | 43 Å |
| Ag | 63.7 Å | 66.3 Å | 74 Å | 73 Å |
| Nb | 15.3Å | 15Å | 16.2Å | 17 Å |
| Zn+ | 74Å | 73 Å | 107 Å | 93 Å |
| Si3N4 | 135 Å | 135 Å | 118Å | 118 Å |
| Zn+ | 197 Å | 206 Å | 191 Å | 189 Å |
| Si3N4 | 139 Å | 133 Å | 124 Å | 122 Å |
| Zn+ | 29 Å | 31 Å | 57 Å | 64 Å |
| ZnO | 61 Å | 62 Å | 62 Å | 51 Å |
| Åg | 143 Å | 140.4 Å | 168 Å | 14i Å |
| Nb | 15.9 Å | 15Å | 16.8Å | 16Å |
| Zn+ | 83 Å | 84 Å | 105 Å | 108 Å |
| Si3N4 | 46Å | 24 Å | 38Å | 34 Å |
| TiN | 13.3Å | 14.1 Å | 15Å | 14 Å |
| Si3N4 | 152 Å | 176 Å | 155 Å | 156 Å |

Color and transmission measurements of Sample D were taken before and after tempering. The sample was tempered in a manner believed to yield acceptable tempering in a commercial production setting. In particular, the coated sample was washed using standard washing equipment and placed in a furnace maintained at about 680-705°C (preferably controlled to 690-700°C). The coated glass is typically held in the furnace for 100-120 seconds with constant movement to better ensure temperature uniformity of the product, which is intended to raise the glass temperature to about 640°C. The glass is then removed from the furnace and in a stream of air for about 50 seconds such that the glass is cool enough for an operator to handle.

The following optical measurements were taken both prior to and after tempering using a Hunter lab Ultrascan: total visible transmission (T) and a and b color values in transmission (Tₐ and T_{b}); transmission at 740 nm (T₇₄₀); reflectance at the uncoated glass side (Rg) and the a and b color values of this reflectance (R_{ga} and R_{gb}); and reflectance at the side of the glass bearing the coating (R_{f}) and the a and b color values of this reflectance (R_{fa} and R_{fb}). Additionally, the resistance of the film was measured in standard fashion using a 4-point probe. Table 2 summarizes the measurements, with the change in each measurement after tempering being noted in the last column.

**TABLE2**

| Color Parameter | Pre-temper | Post-temper | Change |
|---|---|---|---|
| T(%) | 71.4 | 78.7 | +7.3 |
| Tₐ | -2.3 | -2.2 | +0.1 |
| T_{b} | 5.1 | 3.6 | -1.5 |
| T₇₄₀ | 55.8 | 57.4 | +1.6 |
| Rg | 5.9 | 5.6 | -0.3 |
| R_{ga} | 1.6 | 0 | -1.6 |
| R_{gb} | -6.6 | -3.8 | +2.8 |
| R_{f} (%) | 4.8 | 5.2 | +0.4 |
| R_{fa} | -2.7 | -3.6 | -0.9 |
| R_{fb} | 5.3 | 5.1 | -0.2 |
| Resistance (Ω/square) | 3.9 | 2.5 | -1.4 |

The haze of the tempered sample was measured using a hazometer sold by BYK Gardner under the trade name Haze-Gard Plus and a reading of 0.22 was obtained. In addition, the tempered sample was quantitatively evaluated for visible haze (using a Nightguard light source from Lectroscience, Inc. and a QBeam Max Million Rechargeable light source from Brinkmann, both of which are stated to produce 1,000,000 candle power.) The sample was deemed to have acceptable or moderate intensity haze with a slight reddish tinge.

A common, prior art temperable coating was tested for purposes of comparison to the present invention. In particular, a commercially available coated glass sold by PPG Industries under the tradename 1000T was subjected to the same color measurements prior to tempering and was then tempered in the same manner noted above in the test of Sample D and the color measurements were made again. This PPG 1000T product is believed to be a low-emissivity coating having a pair of spaced apart silver layers and a dielectric material positioned beneath, between and above the silver layers, not unlike the coatings outlined in Table 1. Table 3 summarizes the measurements in a manner directly analogous to Table 2. with the change in each measurement noted in the last column.

**TABLE 3**

| Color Parameter | Pre-temper | Post-temper | Change |
|---|---|---|---|
| T (%) | 67.8 | 80.3 | +12.5 |
| Tₐ | -3.2 | -1.4 | +1.8 |
| T_{b} | -2.1 | 1.6 | +3.7 |
| T₇₄₀ (%) | 39.4 | 64 | +24.6 |
| R₆(%) | 8.4 | 7.1 | -1.3 |
| R_{ga} | -2.9 | 2.5 | +5.4 |
| R_{gb} | -0.8 | -4.1 | -3.3 |
| Rₜ(5) | 4.9 | 6.3 | +1.4 |
| R_{fa} | -5.5 | 1.1 | +6.6 |
| R_{fb} | 4.1 | 3.6 | -0.5 |
| Resistance (Ω/square) | 2.68 | 2.13 | -0.6 |

This tempered sample was also tested for haze in the same fashion described above for Sample D. The hazometer measurement was 0.43, reflecting a significantly higher haze than Sample D. In the qualitative analysis, a moderate red haze was noted, but the haze was easy to see even in low lighting conditions and the coating had a broken or blistered appearance.

As can be seen quite readily by comparing the last columns of Table 2 and Table 3, the sample of the invention changed much less during tempering than did the prior art temperable coating. While change in color parameters can result in an acceptable product, it raises some difficulties in production. In particular, the more the coating changes during tempering, the more the visible properties of the product will vary with relatively slight variations in the tempering parameters such as the maximum tempering temperature, the length of time at the maximum temperature and the rate at which the product is heated or cooled. By greatly reducing the change in optical properties, the present invention enables manufacturers to significantly reduce product rejections due to unacceptable color parameters while being a little more forgiving of any unintended variations in production parameters.

The entire coating, not just the composition of the intermediate dielectric stack, contributes to this stability during tempering. For example, the coating may shift color more during tempering if titanium were used instead of niobium. However, it is believed that the nature of the present intermediate dielectric stack has a profound effect in reducing haze in the coating, as evidenced by the fact that the PPG 1000T coating yielded a significantly higher haze reading than did the coating of the invention and produced an unattractive, blistered appearance.

While a preferred embodiment of the present invention has been described, it should be understood that various changes, adaptations and modifications may be made therein without departing from the scope of the appended claims.

## Claims

1. A haze-resistant temperable coating on a substrate having a surface comprising, from the substrate surface outwardly:
a) an inner dielectric layer;
b) a first infrared reflective layer;
c) an intermediate dielectric stack comprising at least five intermediate dielectric layers, each of which have a physical thickness of no more than about 25 nm, each of said intermediate dielectric layers having a different microstructure from each dielectric layer contiguous thereto to limit crystal growth therebetween during tempering;
d) a second infrared reflective layer; and
e) an outer dielectric layer,
wherein a first of the intermediate dielectric layers comprises an oxide or suboxide of zinc, a second of the intermediate dielectric layers is contiguous to the firsts intermediate dielectric layer and comprises silicon nitride, a third of the intermediate dielectric layers is contiguous to the second intermediate dielectric layer and comprises an oxide or suboxide of zinc, a fourth intermediate dielectric layer which comprises silicon nitride contiguous to the third intermediate dielectric layer, and a fifth intermediate dielectric layer which comprises an oxide or suboxide of zinc contiguous to the fourth intermediate dielectric layer.

2. The coating of Claim 1, wherein each of the intermediate dielectric layers has a physical thickness of no more than about 22.5 nm.

3. The coating of Claim 1 or Claim 2, further comprising a sacrificial layer disposed between the first infrared reflective layer and the intermediate dielectric stack.

4. The coating of Claim 3, further comprising a sacrificial layer disposed between the second infrared reflective film and the outer dielectric.

5. The coating of Claim 4, in which the sacrificial layer is a niobium layer.

6. The coating of any one of the preceding claims, wherein each of the layers comprising an oxide or suboxide of zinc have an optical thickness greater than the optical thickness of any of the layers comprising silicon nitride.

7. A substrate having a surface, and including a haze resistant temperable coating according to any one of the preceding claims provided on the surface.

8. A method of forming a coated glass article, the method comprising:
a) providing a glass substrate;
b) depositing a heat treatable coating according to any one of Claims 1 to 7 on the glass substrate.

## Patentansprüche

1. Gegen Anlaufen beständige, temperbare Beschichtung auf einem Substrat, von dem eine Oberfläche in Richtung von der Substratoberfläche aus nach außen aufweist:
a) eine innere dielektrische Schicht,
b) eine erste Infrarotlicht reflektierende Schicht,
c) ein dielektrisches Zwischenschichtensystem, das mindestens aus fünf dielektrischen Schichten besteht, von denen jede eine physikalische Dicke von nicht über etwa 25 nm besitzt und eine Milcrostruktur aufweist, die sich von jeder benachbarten dielektrischen Schicht unterscheidet, um Kristallwachstum dazwischen während des Temperns zu begrenzen,
d) eine zweite Infrarotlicht reflektierende Schicht und
e) eine äußere dielektrische Schicht,
wobei eine erste der dielektrischen Zwischenschichten ein Oxid oder Suboxid von Zink enthält, eine zweite der dielektrischen Zwischenschichten mit der ersten dielektrischen Zwischenschicht in Berührung steht und Siliciumnitrid enthält, eine dritte der dielektrischen Zwischenschichten mit der zweiten dielektrischen Zwischenschicht in Berührung steht und ein Oxid oder Suboxid von Zink enthält, eine vierte dielektrische Zwischenschicht mit der dritten dielektrischen Zwischenschicht in Berührung steht und Siliciumnitrid enthält und eine fünfte dielektrische Zwischenschicht mit der vierten dielektrischen Zwischenschicht in Berührung steht und ein Oxid oder Suboxid von Zink enthält.

2. Beschichtung gemäß Anspruch 1, wobei jede der dielektrischen Zwischenschichten eine physikalische Dicke von nicht über 22,5 nm aufweist.

3. Beschichtung gemäß Anspruch 1 oder 2, die außerdem eine Opferschicht aufweist, die zwischen der ersten Infrarotlicht reflektierenden Schicht und dem dielektrischen Zwischenschichtensystem angeordnet ist.

4. Beschichtung gemäß Anspruch 3, die außerdem eine Opferschicht aufweist, die zwischen der zweiten Infrarotlicht reflektierenden Schicht und der äußeren dielektrischen Schicht angeordnet ist.

5. Beschichtung gemäß Anspruch 4, bei der die Opferschicht eine Niob-Schicht ist.

6. Beschichtung gemäß einem der vorhergehenden Ansprüche, wobei jede der Schichten, die ein Oxid oder Suboxid von Zink enthalten, eine optische Dicke aufweist, die größer ist als die optische Dicke einer der Schichten, die Siliciumnitrid enthalten.

7. Substrat mit einer Oberfläche und einer gegen Anlaufen beständigen, temperbaren Beschichtung gemäß einem der vorhergehenden Ansprüche auf der Oberfläche.

8. Verfahren zur Herstellung eines beschichteten Glasgegenztandes, umfassend:
a) die Bereitstellung eines Glassubstrates und
b) Abscheiden einer wärmebehandelbaren Beschichtung gemäß einem der Ansprüche 1 bis 7 auf dem Glassubstrat.

## Revendications

1. Revêtement résistant au trouble, pouvant subir un traitement thermique, sur un substrat ayant une surface comprenant, de la surface du substrat vers l'extérieur :
a) une couche diélectrique interne;
b) une première couche réfléchissant les infrarouges;
c) un empilement diélectrique intermédiaire comprenant au moins cinq couches diélectriques intermédiaires, chacune ayant une épaisseur physique ne dépassant pas environ 25 nm, chacune dasdites couches diélectriques intermédiaires ayant une microstructure différente dans chaque couche diélectrique qui lui est contiguë pour limiter la croissance cristalline entre elles durant le traitement thermique:
d) une seconde couche réfléchissant les infrarouges; et
e) une couche diélectrique externe,
dans lequel une première des couches diélectriques intermédiaires comprend un oxyde ou un sous-oxyde de zinc, une deuxième des couches diélectriques intermédiaires est contiguë à la première couche diélectrique intermédiaire et comprend du nitrure de silicium, une troisième des couches diélectriques intermédiaires est contiguë à la deuxième couche diélectrique intermédiaire et comprend un oxyde ou un sous-oxyde de zinc, une quatrième couche diélectrique intermédiaire, qui comprend du nitrure de silicium, contiguë à la troisième couche diélectrique Intermédiaire et une cinquième couche diélectrique intermédiaire, qui comprend un oxyde ou un sous-oxyde de zinc, contique à la quatrième couche diélectrique intermédiaire.

2. Revêtement selon la revendication 1, dans lequel chacune des couches diélectriques intermédiaires a une épaisseur physique qui ne dépasse pas environ 22,5 nm.

3. Revêtement selon la revendication 1 ou 2, comprenant en outre une couche sacrificielle disposée entre la première couche réfléchissant les infrarouges et l'empilement diélectrique intermédiaire.

4. Revêtement selon la revendication 3, comprenant en outre une couche sacrificielle disposée entre le deuxième film réfléchissant les infrarouges et le film diélectrique externe.

5. Revêtement selon la revendication 4, dans lequel la couche sacrificielle est une couche de niobium.

6. Revêtement selon l'une quelconque des revendications précédentes, dans lequel chacune des couches comprenant un oxyde ou un sous-oxyde de zinc a une épaisseur optique supérieure à l'épaisseur optique de n'importe laquelle des couches comprenant du nitrure de silicium.

7. Substrat présentant une surface et comprenant un revêtement résistant au trouble pouvant subir un traitement thermique, appliqué sur la surface selon l'une quelconque des revendications précédentes.

8. Procédé de formation d'un article de verre revêtu, le procédé comprenant les étapes suivantes :
a) l'élaboration d'un substrat de verre;
b) le dépôt d'un revêtement pouvant être traité à chaud selon l'une quelconque des revendications 1 à 7 sur le substrat de verre.
